# EUROPEAN PATENT APPLICATION

(11) **EP 1 923 279 A1**
(43) Date of publication of application: **21.05.2008**
(21) Application number: 07120328.5
(22) Date of filing: 09.11.2007
(51) Int. Cl.: B60R 25/04, G07C 9/00

(54) **Device for starting vehicle in emergency**

(30) Priority: 20.11.2006 KR 20060114218
(71) Applicant: HYUNDAI MOTOR COMPANY, Seoul 137-938 (KR)
(72) Inventor: Kim, Eun Hee, Gwonseon-gu, Suwon-si Gyeonggi-do 441-761 (KR)
(74) Representative: Viering, Jentschura & Partner

(57) **Abstract**

A device for starting a vehicle in an emergency is disclosed. The device includes a fob key for transferring a starting signal for starting the vehicle via a wireless connection or a driver's authentication information via a Universal Serial Bus (USB) connection, and a vehicle starting unit for receiving the starting signal or the driver's authentication information, determining whether a driver in question is a valid user, and starting the vehicle. The vehicle starting unit includes an interface unit for receiving the driver's authentication information transferred via a USB connection, an audio unit for identifying the driver's authentication information transferred from the interface unit, and a Personal Identification Card (PIC) unit for receiving the driver's authentication information from the audio unit or the starting signal from the fob key, determining whether the driver in question is a valid user, and starting the vehicle.

## Description

### CROSS-REFERENCE TO RELATED APPLICATIONS

This application claims priority to Korean Application No. 10-2006-0114218, filed on November 20, 2006, the disclosure of which is incorporated herein by reference.

### BACKGROUND OF THE INVENTION

### 1. Field of the Invention

The present invention relates to a device for starting a vehicle in an emergency, which is capable of starting the vehicle when a failure occurs in wireless communication between a fob key and the vehicle.

### 2. Description of the Related Art

Conventional vehicle starting devices are mechanical vehicle starting devices using keys. Vehicle starting devices in which remote control technology is applied to mechanical vehicle starting devices have also been developed.

Thereafter, fob keys, capable of starting vehicles through wireless communication with starting units provided in vehicles, were proposed and started to be applied to vehicles in the late 1990s.

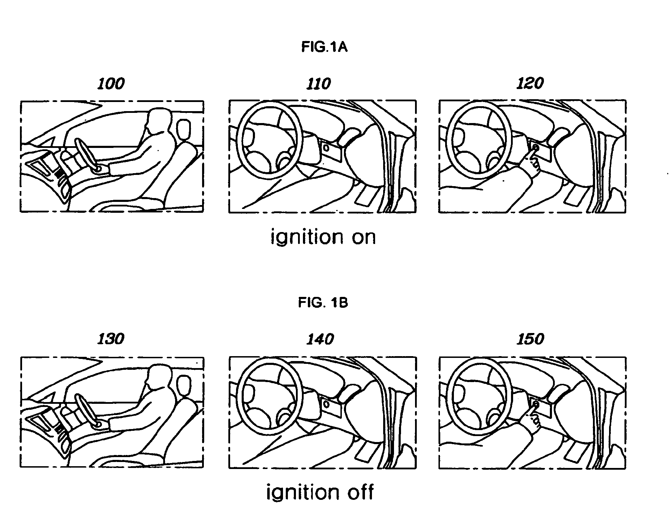

FIG. 1A is a conceptual diagram showing a method of starting a vehicle using a fob key.

When a starting signal is transferred from a fob key through a driver's action of pressing a starting button under conditions in which the fob key is located in a predetermined range at stage of 100, the gear of a vehicle is located in a Park (hereinafter referred to as 'P') position and a brake pedal is pressed at stage of 110, a vehicle starting unit (not shown) disposed in a vehicle starts the vehicle at stage of 120.

FIG. 1B is a conceptual diagram showing a method of turning off a vehicle using a fob key.

When the vehicle is stopped at stage of 130, the gear of the vehicle is located at P position at stage of 140 and an off signal is transferred through a driver's action of pressing the starting button, the vehicle starting unit turns off the vehicle at stage of 150.

However, the above-described vehicle starting device using wireless communication has a problem of not being able to start a vehicle in the case where a failure occurs in communication between the fob key and the vehicle starting unit (for example, in the case where the internal battery of the fob key is discharged).

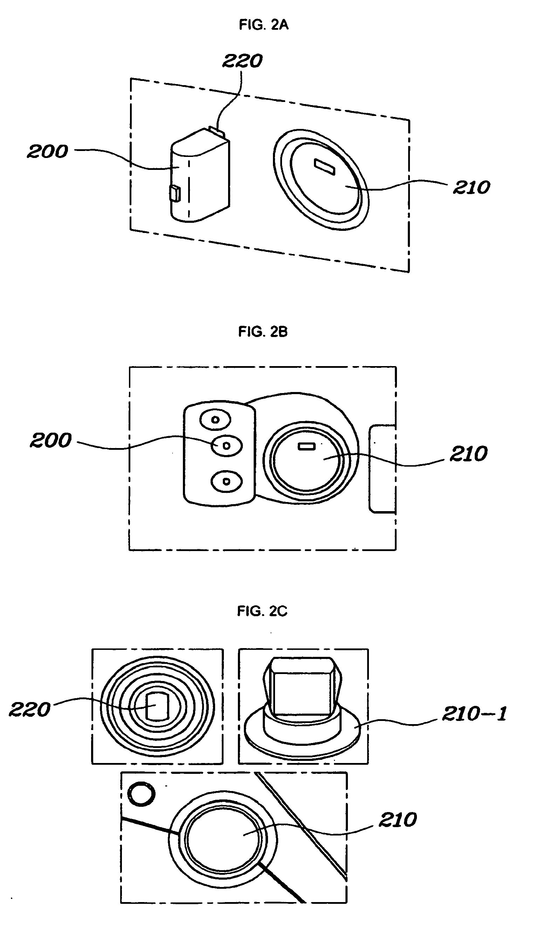

Therefore, in order to overcome the problem, methods of starting a vehicle in an emergency have been proposed, and will be described with reference to FIGS. 2A to 2C below.

FIG. 2A is a diagram showing a method of starting a vehicle in an emergency using a fob key holder. When a fob key 200 is inserted into a fob key holder 220, a driver's authentication information is transferred from the fob key 200, having received emergency power, to a vehicle starting unit, and thus a vehicle is started.

FIG. 2B is a diagram showing a method of starting a vehicle in an emergency using a vehicle starting button. When a fob key 200 approaches a vehicle starting button 210 within a predetermined range, a driver's authentication information is transferred from a fob key 200, having received emergency power, to a vehicle starting unit, and thus a vehicle is started.

FIG. 2C is a diagram showing a method of starting a vehicle in an emergency with a fob key holder provided below a vehicle starting button. When the lid 210-1 of a vehicle starting button 210 is removed in an emergency, a fob key holder 220 becomes visible. According to this method, a vehicle is started in the same manner as in FIG. 2A.

However, the above-described methods have problems in that separate devices having the sole purpose of starting a vehicle must be provided, so the manufacturing cost of the vehicle increases and the appearance of the vehicle is complicated.

The information disclosed in this Background of the Invention section is only for enhancement of understanding of the background of the invention and should not be taken as an acknowledgement or any form of suggestion that this information forms the prior art that is already known to a person skilled in the art.

### SUMMARY OF THE INVENTION

Accordingly, the present invention has been made keeping in mind the above problems occurring in the prior art, and an object of the present invention is to provide a device for starting a vehicle in an emergency, which uses an audio unit and a USB port, which are generally provided in vehicles, in place of a fob key holder, thereby reducing the manufacturing cost of the vehicle.

Another object of the present invention is to provide a device for starting a vehicle in an emergency, which is implemented using the USB port of the vehicle, thereby improving the appearance of the vehicle.

In order to accomplish the above object, the present invention provides a device for starting a vehicle in an emergency, including a fob key for transferring a starting signal via a wireless connection, or a driver's authentication information via a USB connection, and a vehicle starting unit for receiving the starting signal or the driver's authentication information, determining whether the driver in question is a valid user, and starting the vehicle;

Here, the vehicle starting unit may include an interface unit, an audio unit and a Personal Identification Card (PIC) unit.

The interface unit may receive the driver's authentication information in the case where the fob key transfers the driver's authentication information via a USB connection. Here, the interface unit may be located in a portion of the interior of the vehicle, and may be connected to any one of the external devices (for example, a USB memory device, an electronic dictionary, an MP3 player, a mobile phone, and the fob key) that are connectable via a USB connection.

The audio unit may transfer the driver's authentication information to the PIC unit if data transferred from the interface unit is the driver's authentication information. In this case, the audio unit may play music if the data transferred from the interface unit is music data.

The PIC unit determines whether the driver in question is a valid user using the driver's authentication information transferred from the audio unit, and starts the vehicle if the authentication is successful. Of course, the PIC unit may identify the starting signal transferred from the fob key via a wireless connection, and then start the vehicle.

The fob key may include a USB port, a transformer, and a fob module.

The fob module may transfer the driver's authentication information via a USB connection, or a starting signal in a wireless connection.

The transformer transforms the voltage of the USB port into the voltage of the fob module.

The USB port may transfer the driver's authentication information, transferred from the fob module, to the interface unit of the vehicle starting unit.

In this case, the interface unit may be located in a portion of the interior of the vehicle, preferably in a console box, an auxiliary compartment below an audio device, or a glove box in front of a front passenger's seat. If the interface unit includes a plurality of interface units, they may be located in two or more of the console box, the auxiliary compartment and the glove box.

Although the device for starting a vehicle in an emergency has been described as including only the fob key and the vehicle starting unit, a USB connector may connect the fob key with the vehicle starting unit.

Here, it is preferable that the USB port be a plug type (a positive shape), that the interface unit be a socket type (a negative shape), and that they fit each other.

Describing the PIC unit in greater detail, in the case where a failure occurs in wireless communication with the fob key, the PIC unit cannot start the vehicle in response to a wireless signal from the fob key, so the PIC unit may transfer a signal, requesting the driver's authentication information, to the fob key via the audio unit and the interface unit.

In this case, the fob key may transfer the driver's authentication information only in response to a signal requesting the driver's authentication information.

### BREIF DESCRIPTION OF THE DRAWINGS

The above and other features of the present invention will now be described in detail with reference to certain exemplary embodiments thereof illustrated the accompanying drawings which are given hereinbelow by way of illustration, and thus are not limitative of the present invention, and wherein:

FIG. 1A is a conceptual diagram showing a conventional method of starting a vehicle using a fob key;

FIG. 1B is a conceptual diagram showing a conventional method of turning off a vehicle using a fob key;

FIG. 2A is a diagram showing a conventional method of starting a vehicle in an emergency using a fob key holder;

FIG. 2B is a diagram showing a conventional method of starting a vehicle in an emergency using a vehicle starting button;

FIG. 2C is a diagram showing a conventional method of starting a vehicle in an emergency with a fob key holder provided below a vehicle starting button;

FIG. 3A is a conceptual diagram showing the fob key of a device for starting a vehicle in an emergency according to the present invention;

FIG. 3B is a conceptual diagram showing the vehicle starting unit of the device for starting a vehicle in an emergency according to the present invention;

FIG. 4 is a detailed configuration diagram of the device for starting a vehicle according to the present invention;

FIG. 5A is a diagram showing an example of the implementation of a device for starting a vehicle according to an embodiment of the present invention; and

FIG. 5B is a diagram showing the location of a USB port according to the present invention.

It should be understood that the appended drawings are not necessarily to scale, presenting a somewhat simplified representation of various preferred features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DESCRIPTION OF THE PREFERRED EMBODIMENTS

Reference will now be made in detail to a preferred embodiment of the present invention, an example of which is illustrated in the accompanying drawings and described below. While the invention will be described in conjunction with an exemplary embodiment, it should be understood that the description is not intended to limit the invention to the exemplary embodiment. On the contrary, the invention is intended to cover not only the exemplary embodiment, but also various alternatives, modifications, equivalents and other embodiments, which may be included within the spirit and scope of the invention as defined by the appended claims.

The following description of a device for starting a vehicle in an emergency according to the present invention will be given, with focus on the operation of elements operated in response to a failure in bidirectional communication between a fob key 10 and a vehicle starting unit 30.

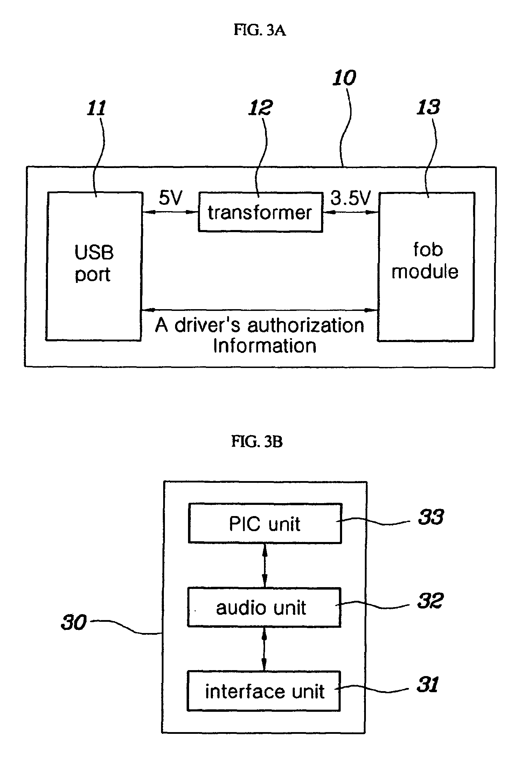

FIG. 3A is a conceptual diagram of the fob key 10.

The fob key 10 according to the present invention includes a Universal Serial Bus (USB) port 11, a transformer 12, and a fob module 13.

The USB port 11 receives a driver's authentication information from the fob module 13, and, in turn, transfers the authentication information to the vehicle starting unit 30.

The transformer 12 transforms 5 V, applied to the USB port 11, into 3.5 V, which is the voltage value that is used in the fob module 13. The reason for this is that it is required that the USB device operate at a driving voltage of 5 V and that the fob module 13 operate at a driving voltage of 3.5 V.

However, the above-described voltage value may be changed within an allowable error range for operation.

The fob module 13 receives the voltage of 3.5 V from the transformer 12, and transfers a driver's authentication information for the starting of a vehicle to the USB port 11. In this case, the fob module 13 transfers a driver's authentication information based on the USB standard.

In this case, in the case where wireless communication with the vehicle is performed without failure, the fob module 13 transfers a wireless signal for starting the vehicle to a PIC unit (which will be described in conjunction with FIG. 3B) located in the vehicle.

FIG. 3B is a conceptual diagram showing the vehicle starting unit 30 of the device for starting a vehicle in an emergency according to the present invention.

The vehicle starting unit 30 includes an interface unit 31, an audio unit 32, and a PIC unit 33.

The interface unit 31 additionally processes the driver's authentication information, transferred via the USB port 11, and transfers the additionally processed driver's authentication information to the audio unit 32. Here, the additional processing may be the removal of the noise or expansion of the bandwidth of the driver's authentication information.

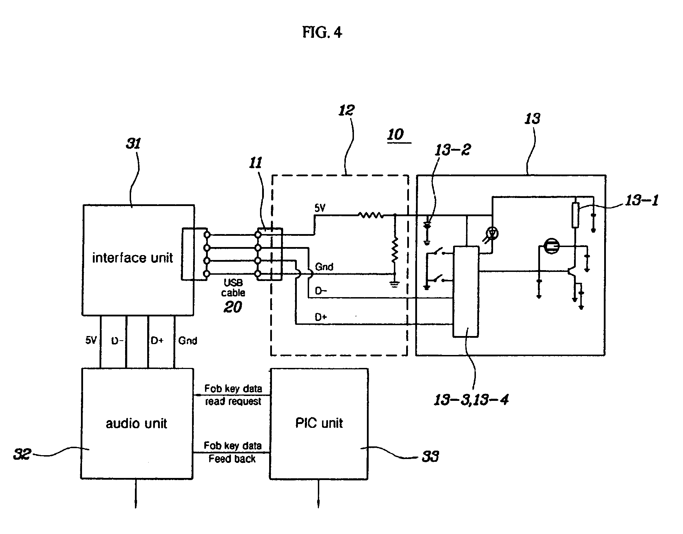

FIG. 4 is a detailed configuration diagram of the device for starting a vehicle in an emergency according to the present invention. Here, descriptions of parts identical with those of FIGS. 3A and 3B are omitted.

The interface unit 31 includes a USB connection unit connected to the USB port 11 of the fob key 10. The following description will be made on the assumption that the interface unit 31 is provided with the USB connection unit.

The audio unit 32 transfers the driver's authentication information, transferred from the interface unit 31, to the PIC unit 33.

The PIC unit 33 determines whether the driver in question is a valid user, using the driver's authentication information transferred from the audio unit 32, and starts the vehicle if the driver in question is determined to be a valid driver.

As described above, when wireless communication with the fob key 10 is performed without failure, the PIC unit 33 can receive a starting signal wirelessly transferred from the fob key 10, determine whether the driver in question is a valid user, and then start the vehicle.

In contrast, when a failure occurs in wireless communication with the fob key 10, the PIC unit 33 may first transfer a signal, requesting the driver's authentication information from the fob key 10 connected by USB connection unit to the interface unit 31, to the PIC unit 33 via the audio unit 32 and the interface unit 31.

Although the vehicle starting unit 30 has been described on the assumption that the fob key 10 is connected to the interface unit 31, a general USB memory device (not shown) may be connected to the interface unit 31.

In this case, the interface unit 31 transfers certain data (for example, avi, mp3, or wma data), transferred from the USB memory device, to the audio unit 32, and then the audio unit 32 plays music based on the received music data.

Although not shown in the drawings, the shape of the USB port 11 of the fob key 10 and the shape of the interface unit 31 of the vehicle starting unit 30 are formed to fit each other. In particular, it is preferred that, when the USB port 11 is a plug type (a positive shape), the counterpart of the interface unit 31 is a socket type (a negative shape).

In this case, when the USB port 11 is a plug type, the USB port 11 may be implemented to be inserted into or to protrude from the fob key 10.

The device for starting a vehicle in an emergency according to the present invention may further include a USB connector 20 for connecting the USB port 11 with the interface unit 31. Here, it is obvious that the shape of the USB port 11 and the shape of the interface unit 31 correspond to the shape of the USB connector 20, as described above.

The device for starting a vehicle in an emergency according to the present invention has advantages in that it utilizes the interface unit 31 and the audio unit 32, which are generally used in vehicles, so the manufacturing cost thereof can be reduced and the appearance of the vehicle can be improved.

The transformer 12 transforms 5 V, which is the voltage used in the USB port 11, into 3.5 V, which is the voltage used in the fob module 13, as described above. In order to implement this, the transformer 12 includes two resistors that are connected in parallel to each other. The ratio of resistances of the resistors, connected in parallel to each other, can be easily calculated using the voltage division rule (that is, 3.5 V/5 V).

The fob module 13 includes an antenna 13-1, a capacitor unit 13-2, a storage unit 13-3, and a control unit 13-4.

The antenna 13-1 wirelessly sends the starting signal, stored in the storage unit 13-3, to the PIC unit 33.

The capacitor unit 13-2 supplies power to or receives power from respective elements of the fob module 13.

The driver's authentication information and the starting signal are recorded in the storage unit 13-3. Meanwhile, the driver's authentication information may be identical to the starting signal.

The control unit 13-4 controls the antenna 13-1, the capacitor unit 13-2 and the storage unit 13-3 so that the starting signal can be wirelessly transferred via the antenna 13-1 or the driver's authentication information can be transferred through the USB port 11 via a wired USB connection to the PIC unit 34.

The driver's authentication information may be transferred via a USB connection only when the control unit 13-4 of the fob module 13 receives a signal, requesting the driver's authentication information, from the PIC unit 34.

FIG. 5A is a diagram showing a device for starting a vehicle according to an embodiment of the present invention. This drawing depicts an embodiment in which the fob key 10 is connected to the interface unit 31 of a vehicle through a USB connector 20. However, the audio unit 32 and PIC unit 33 of the vehicle starting unit 30 are not provided in the vehicle, and thus they are not shown in the drawing.

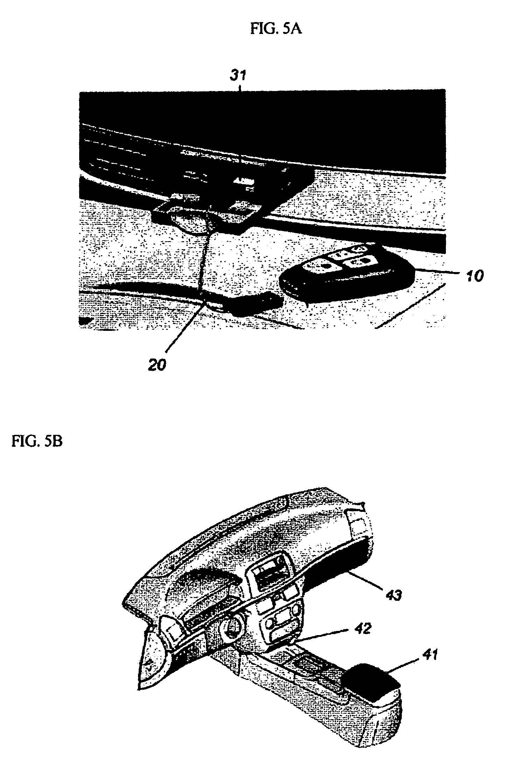

FIG. 5B is a diagram showing the location of the interface unit 31 according to the present invention. The interface unit 31 may be located in any one of a console box 41, an auxiliary compartment 42 below an audio device, and a glove box 43 in front of a front passenger's seat so as to improve the appearance of a vehicle and improve the utilization of the space inside a vehicle.

The present invention has an advantage in that a fob key holder is removed and the need for a separate device for starting a vehicle in an emergency is eliminated using USB equipment already used in a vehicle, thereby reducing the manufacturing cost of the vehicle.

Furthermore, the present invention has an advantage in that an interface unit connected to the fob key to start a vehicle in an emergency can be disposed at various locations, thereby improving the appearance of the vehicle.

Moreover, the present invention has an advantage in that a USB connector can be used, even though the interface unit is fastened to a portion of the vehicle, thereby increasing the utilization of the emergency starting of a vehicle using the fob key.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A device for starting a vehicle in an emergency, comprising:
a fob key for transferring a starting signal for starting the vehicle via a wireless connection or a driver's authentication information via a Universal Serial Bus (USB) connection; and
a vehicle starting unit for receiving the starting signal or the driver's authentication information, determining whether a driver in question is a valid user, and starting the vehicle;
wherein the vehicle starting unit comprises:
an interface unit for receiving the driver's authentication information transferred via the USB connection;
an audio unit for identifying the driver's authentication information transferred from the interface unit; and
a Personal Identification Card (PIC) unit for receiving the driver's authentication information from the audio unit or the starting signal from the fob key, determining whether the driver in question is a valid user, and starting the vehicle.

2. The device as set forth in claim 1, wherein the fob key comprises:
a USB port for transferring the driver's authentication information to the interface unit;
a fob module for transferring the driver's authentication information to the USB port, or the starting signal to the PIC unit via the wireless connection; and
a transformer for transforming a voltage used in the USB port into a voltage used in the fob module.

3. The device as set forth in claim 1, wherein the interface unit is provided in at least one of a console box, an auxiliary compartment below an audio device, and a glove box in front of a front passenger's seat.

4. The device as set forth in claim 1, further comprising a USB connector for connecting the fob key with the vehicle starting unit.

5. The device as set forth in claim 2, wherein the USB port is a plug type and the interface unit is a socket type.

6. The device as set forth in claim 1, wherein the PIC unit transfers a signal requesting the driver's authentication information to the fob key via the audio unit and the interface unit when a failure of the wireless connection occurs between the fob key and the PIC unit.

7. The device as set forth in claim 6, wherein the fob key transfers the driver's authentication information to the vehicle starting unit when the signal requesting the driver's authentication information is received.
